# EUROPÄISCHE PATENTANMELDUNG

(11) **EP 2 546 778 A2**
(43) Veröffentlichungstag der Anmeldung: **16.01.2013**
(21) Anmeldenummer: 12004402.9
(22) Anmeldetag: 12.06.2012
(51) Int. Cl.: G06K 9/00

(54) **Verfahren zum evaluieren einer Objekterkennungseinrichtung eines Kraftfahrzeugs**

(30) Priorität: 15.07.2011 DE 102011107458
(71) Anmelder: Audi AG, 85045 Ingolstadt (DE)
(72) Erfinder: Nentwig, Mirko, 85057 Ingolstadt (DE)
(74) Vertreter: Thielmann, Frank

(57) **Zusammenfassung**

Um eine Objekterkennungseinrichtung für ein Kraftfahrzeug mit vertretbarem Kostenaufwand für unterschiedliche Fahrstrecken (16) testen zu können, kann vorgesehen sein, Bilddaten zum Testen der Objekterkennungseinrichtung mittels einer Kamera-Simulationseinrichtung (12) zu erzeugen. Da die Bilddaten (26) einer Kamera-Simulationseinrichtung (12) künstlich erzeugt werden, muss aber zusätzlich sichergestellt werden, dass diese auch realistisch auf die Objekterkennungseinrichtung wirken. Es ist Aufgabe der vorliegenden Erfindung, eine kostengünstige Entwicklung einer Objekterkennungseinrichtung für Kraftfahrzeuge zu ermöglichen. Gemäß dem erfindungsgemäßen Verfahren werden zu wenigstens einer Fahrstrecke (16) zum einen Referenzbilddaten (24) mittels einer Kamera (14) und zum anderen Simulationsbilddaten (26) mittels der Kamera-Simulationseinrichtung (12) erzeugt. Die Simulationsbilddaten (26) und die Referenzbilddaten (24) werden miteinander auf der Grundlage von wenigstens zwei Vergleichsmaßen (M(I), M(Grad. I), M(Grad. Dir.)) verglichen. Zu jedem davon ist dabei unabhängig von der zu testenden Objekterkennungseinrichtung ein Wert bestimmbar. Anschließend wird überprüft, ob durch die Gesamtheit der erzeugten Vergleichswerte ein vorbestimmtes Überprüfungskriterium (52) erfüllt ist.

## Beschreibung

Die Erfindung betrifft ein Verfahren zum Bewerten einer Funktionstüchtigkeit einer Objekterkennungseinrichtung eines Kraftfahrzeugs mittels einer Kamera-Simulationseinrichtung. Zu der Erfindung gehört auch eine Vorrichtung zum Überprüfen einer Eignung der Kamera-Simulationseinrichtung für die Verwendung bei der Bewertung der Funktionstüchtigkeit der Objekterkennungseinrichtung.

Eine Objekterkennungseinrichtung ist beispielsweise aus der DE 10 2008 001 256 A1 bekannt. Mittels einer Objekterkennungseinrichtung können auf der Grundlage einer maschinellen Bildverarbeitung in einem Bild oder einer Bildfolge einzelne Objekte erkannt und klassifiziert werden. In einem Kraftfahrzeug kann eine solche Objekterkennungseinrichtung benutzt werden, um in einer Umgebung des Fahrzeugs andere Verkehrsteilnehmer und Hindernisse automatisch zu erkennen und auf dieser Grundlage einem Fahrer des Fahrzeugs eine Unterstützung beim Führen des Fahrzeugs bereitzustellen. Denkbar ist hier z.B. eine Spurhalteassistenz, das Einleiten einer Notbremsung, eine Verkehrszeichenerkennung, eine Fußgängererkennung oder eine Abstandsregelung. Die Bilder für die Erkennung stammen dann z.B. von einer Video-, Infrarot- oder Tiefenbildkamera, die sich beispielsweise im Spiegelfuß, im Seitenspiegel oder in der Heckklappe des Fahrzeugs befinden kann.

Bevor ein bestimmtes Modell einer Objekterkennungseinrichtung in einem Fahrzeug verwendet werden kann, muss durch ausführliche Tests festgestellt werden, ob diese Entwicklungsausprägung die technischen Anforderungen erfüllt. Mit anderen Worten muss festgestellt werden, ob das fragliche Modell in dem Sinne funktionstüchtig ist, dass es für den Einsatz in einem Fahrzeug taugt. Andernfalls kann es beispielsweise vorkommen, dass durch eine fehlerhafte Erkennung grundlos eine Notbremsung eingeleitet und hierdurch ein Unfall verursacht wird. Zum Bewerten der Funktionstüchtigkeit, d.h. für die Evaluierung der Objekterkennungseinrichtung, ist es nötig, diese für möglichst viele unterschiedliche Umgebungen und Fahrsituationen zu testen.

Dazu können Filmaufnahmen verwendet werden, die auf einer Testfahrt mit dem gleichen Modell einer Kamera aufgezeichnet wurden, das später auch als Bildquelle für die Objekterkennungseinrichtung selbst verwendet werden soll. Solche Testfahrten sind aber verhältnismäßig kostspielig.

Um die Objekterkennungseinrichtung unter einem vertretbaren Kostenaufwand für noch mehr unterschiedliche Fahrstrecken evaluieren zu können, kann vorgesehen sein, die Bilddaten zum Testen der Objekterkennungseinrichtung nicht mittels einer Kamera, sondern auf der Grundlage einer Simulation zu erzeugen. Hierbei berechnet ein Simulator zum einen die Bildinformationen, wie sie sich aus dem Blickwinkel einer in einem Fahrzeug eingebauten Kamera während einer Fahrt ergeben würden. Zum anderen werden durch den Simulator auch optische Verzerrungen und weitere, die Bildinformationen verfälschenden Einflüsse nachgebildet, wie sie durch die Kamera verursacht werden, wenn diese das sich ihr bietende Bild erfasst und die erfassten Bilddaten an die Objekterkennungseinrichtung überträgt. Ein Simulator für eine solche kombinierte Simulation einer Fahrstrecke und einer Abbildungscharakteristik einer Kamera ist hier als Kamera-Simulationseinrichtung bezeichnet.

Da die Bilddaten einer Kamera-Simulationseinrichtung künstlich erzeugt werden, muss sichergestellt sein, dass eine mit ihrer Hilfe entwickelte Objekterkennungseinrichtung auch fehlerfrei mittels einer realen Kamera in einer realen Fahrsituation betreibbar ist. Mit anderen Worten müssen die von der Kamera-Simulationseinrichtung erzeugen Simulationsbilddaten zumindest in Bezug auf diejenigen Merkmale möglichst realistisch wirken, die für die Objekterkennung relevant sind. Solche Merkmale können z.B. die Detailtreue der simulierten Objekte selbst, eine Abbildungscharakteristik einer Kameralinse oder auch ein Rauschen des Bildsensors der Kamera sein.

Aus der oben genannten Druckschrift ist im Zusammenhang mit einer Verbesserung einer Fahrzeugumgebungs-Simulation bekannt, eine Erkennung von Objekten zum einen auf der Grundlage von Filmaufnahmen von realen Fahrszenen und zum anderen auf der Grundlage von Bildfolgen aus einem Simulator durchzuführen. Falls sich die Erkennungsergebnisse zu diesen beiden Erkennungsversuchen unterscheiden, kann die Simulation nicht besonders real gewirkt haben. Deshalb wird in diesem Fall der Simulator neu konfiguriert.

Nachteilig bei diesem Verfahren ist, dass der Simulator hierdurch zwangsläufig an einen bestimmten Typ von Objekterkennungseinrichtung angepasst wird, nämlich denjenigen, der zur Konfiguration des Simulators verwendet wird. Durch dieses Verfahren ist nicht gänzlich sichergestellt, dass der Simulator dann auch realistisch wirkende Simulationsbilddaten in Bezug auf solche Merkmale erzeugt, die bei einem anderen Typ von Objekterkennungseinrichtung für dessen Erkennungsvermögen entscheidend sind. Daher muss bei der Entwicklung von Objekterkennungseinrichtungen vor einer Erprobung neuer Erkennungsalgorithmen zunächst stets der Simulator neu konfiguriert werden.

Es ist Aufgabe der vorliegenden Erfindung, eine kostengünstige Entwicklung einer Objekterkennungseinrichtung für ein Kraftfahrzeug zu ermöglichen.

Die Aufgabe wird durch ein Verfahren gemäß Patentanspruch 1 und durch ein Vorrichtung gemäß Patentanspruch 12 gelöst. Vorteilhafte Weiterbildungen des Verfahrens sind durch die Unteransprüche gegeben.

Durch das erfindungsgemäße Verfahren wird es ermöglicht, eine Funktionstüchtigkeit einer Objekterkennungseinrichtung eines Kraftfahrzeugs mittels einer Kamera-Simulationseinrichtung zu bewerten.

Um sicherzustellen, dass die Kamera-Simulationseinrichtung hierbei in dem oben beschriebenen Sinne realitätsnahe Simulationsbilddaten bereitstellt, werden zu wenigstens einer Fahrstrecke zum einen Referenzbilddaten mittels einer Kamera und zum anderen Simulationsbilddaten mittels der Kamera-Simulationseinrichtung erzeugt. Die Simulationsbilddaten und die Referenzbilddaten werden dann miteinander verglichen, und zwar auf der Grundlage von wenigstens zwei unterschiedlichen, vorbestimmten Vergleichsmaßen. Jedes dieser Vergleichmaße ist derart gewählt, dass zu diesem Vergleichsmaß unabhängig von einer Verarbeitung der Daten durch die Objekterkennungseinrichtung ein Wert ermittelt werden kann. Der Vergleich der Bilddaten erfolgt also durch Bilden jeweils wenigstens eines Vergleichswerts zu jedem der Vergleichsmaße, und das ohne die Verwendung einer Objekterkennungseinrichtung.

Handelt es sich beispielsweise bei den Referenzbilddaten und den Simulationsbilddaten jeweils um Pixel-Daten, durch die einzelne Bildpunkte eines Bildes der Fahrstrecke repräsentiert sind, so kann ein sehr einfacher Vergleich darin bestehen, zu jedem Paar von Pixel-Daten, die denselben Bildpunkt repräsentieren (einmal im realen Kamerabild, einmal im simulierten Kamerabild), einen Vergleichswert zu jedem Vergleichsmaß zu bilden.

Anhand der so gebildeten Vergleichswerte lässt sich die Kamera-Simulationseinrichtung nun zuverlässig validieren, d.h. ihre Eignung zum Testen der Objekterkennungseinrichtung lässt sich nun sicher feststellen. Hierzu wird überprüft, ob durch die Gesamtheit der erzeugten Vergleichswerte ein vorbestimmtes Überprüfungskriterium erfüllt ist. Nur eine Kamera-Simulationseinrichtung, durch deren Simulationsbilddaten das Überprüfungskriterium erfüllt wird, wird dann für die Verwendung bei der Bewertung der Funktionstüchtigkeit der Objekterkennungseinrichtung bereitgestellt. Welches Überprüfungskriterium hierbei geeignet ist, hängt von den verwendeten Vergleichsmaßen ab und lässt sich, sobald die Vergleichsmaße feststehen, beispielsweise durch Testreihen einfach ermitteln.

Durch das erfindungsgemäße Verfahren ergibt sich der Vorteil, dass eine auf seiner Grundlage validierte Kamera-Simulationseinrichtung für unterschiedliche Typen von Objekterkennungseinrichtungen verwendet werden kann. Durch eine geeignete Wahl von Vergleichsmaßen kann auf einfache Weise wirksam vermieden werden, dass die Kamera-Simulationseinrichtung nur für einen bestimmten Typ von Objekterkennungseinrichtung zuverlässig validiert wird. Der Erfindung liegt dabei die Erkenntnis zugrunde, dass bereits auf der Grundlage von nur zwei unterschiedlichen, objektiven Vergleichsmaßen, also Vergleichsmaßen, zu denen jeweils unabhängig von der später zu verwendenden Objekterkennungseinrichtung ein Wert bestimmbar ist, eine zuverlässige Aussagen darüber getroffen werden kann, ob die Simulationsbilddaten einer Kamera-Simulationseinrichtung realistisch wirken oder nicht. In diesem Zusammenhang sei erwähnt, dass eine bevorzugte Ausführungsform des erfindungsgemäßen Verfahrens die Verwendung von drei unterschiedlichen Vergleichsmaßen vorsieht.

In einer weiteren, ebenfalls bevorzugten Ausführungsform des erfindungsgemäßen Verfahrens wird zumindest ein Vergleichsmaß verwendet, das einen Unterschied von Farbintensitätsdaten, Helligkeitsdaten, Kontrastdaten oder Kantenverlaufsrichtungsdaten beschreibt. Diese Ausbildung des erfindungsgemäßen Verfahrens beruht auf der Erkenntnis, dass auch ein sehr komplexes und vielschichtiges Objekterkennungsverfahren, wie es möglicherweise durch eine Objekterkennungseinrichtung ausgeführt werden kann, oftmals auf einer Analyse von Farben, Helligkeitswerten, Kontrasten und Verlaufsrichtungen von Objektkanten beruht. Durch eine Auswertung dieser graphischen Basiselemente in einem simulierten Kamerabild lässt sich deshalb zuverlässig vorhersagen, ob dieses realistisch auf die Objekterkennungseinrichtung wirkt.

Durch Farbintensitätsdaten sind die Anteile einzelner Farbkomponenten eines Bildpunktes angegeben. Welche Farbkomponenten dies sind, kann z.B. durch das Farbmodell der verwendeten Kamera festgelegt sein. Häufig vorkommende Farbmodelle verwenden als Farbkomponenten Rot, Grün und Blau (RGB-Farbmodell) oder, im Falle des HSV-Farbmodells, den Farbton (Englisch: hue), die Farbsättigung (saturation) und den Hellwert bzw. die Dunkelstufe (value). Die neben den Farbintensitätsdaten ebenfalls verwendbaren Helligkeitsdaten sind beim HSV-Farbmodell in Form des Hellwerts gegeben, bei anderen Farbmodellen lassen sie sich mittels bekannter Umrechnungsvorschriften berechnen. Durch Farbintensitätsdaten und Helligkeitsdaten sind in der Regel die Oberflächeneigenschaften von Objekten beschrieben.

Kontrastdaten beschreiben Unterschiede zwischen den Farbintensitäts- oder Helligkeitswerten benachbarter Bildpunkte. Sie können aus einem Kamerabild beispielsweise mittels eines numerischen Verfahrens zur Gradientenberechnung, wie etwa eines Laplace-Filters, ermittelt werden. Durch Kontrastdaten lässt sich in einem Bild ein Objekt von einem Hintergrund unterscheiden. Sie beschreiben die in einem Bild erkennbaren Strukturen.

Kantenverlaufsrichtungsdaten beschreiben, wo sich in einem Bild beispielsweise horizontal oder vertikal verlaufende Linen befinden. Sie können beispielsweise durch Anwenden eines Sobel-Operators oder eines Canny-Algorithmus auf das simulierte bzw. das reale Kamerabild erzeugt werden. Anhand von Kantenverlaufsrichtungsdaten können Objekte nach ihrer Form unterschieden werden.

Ein weiterer Vorteil ergibt sich, wenn der Vergleich jeweils zwischen einer ganzen Bildregionen des simulierten Kamerabildes und des realen Kamerabilds durchgeführt wird, und hierbei jeweils zu Bildregionen als Ganzes ein Vergleichswert zu jedem Vergleichsmaß gebildet wird. Hierdurch ergibt sich der Vorteil, dass durch den Vergleichswert nicht schon deshalb ein großer Unterschied zwischen einer Region im simulierten Kamerabild und der entsprechenden Region im realen Kamerabild angezeigt wird, weil ein Objekt in dem simulierten Kamerabild im Vergleich zu demselben Objekt im realen Kamerabild geringfügig verschoben, rotiert oder verzerrt ist. Die Bildung der Vergleichswerte kann somit bis zu einem bestimmbaren Maß invariant gemacht werden gegenüber einer Translation oder Rotation oder einer Verzerrung, wie sie auch für die Objekterkennung ebenso irrelevant ist. Das Verfahren ist damit in der Lage, geringfügige geometrische Abweichungen bei der Simulation der Umgebung und der Kameraposition zu kompensieren.

Des weiteren hat es sich als vorteilhaft erwiesen, wenn zu wenigstens einem Teil der Simulationsbilddaten, also z.B. zu wenigstens einer Bildregion, ein erster statistischer Mittelwert und/oder ein erster statistischer Varianzwert ermittelt wird und zu dem jeweils entsprechenden Teil der Referenzbilddaten ein zweiter statistischer Mittelwert und/oder ein zweiter statistischer Varianzwert berechnet wird. Auf der Grundlage dieser statistischen Werte kann dann ebenfalls ein Vergleichswert gebildet werden, bei dem sichergestellt ist, dass er nur dann einen großen Wert annimmt, wenn die Simulationsbilddaten im Vergleich zu den Referenzbilddaten tatsächlich irreal wirken. Beispielsweise kann der Vergleichswert als Differenz der Mittelwerte oder der Varianzwerte oder aber auch durch Verknüpfen dieser beiden Differenzen berechnet werden. Mittelwerte und Varianzwerte werden bevorzugt im Zusammenhang mit Farbintensitätsdaten, Helligkeitsdaten und Kontrastdaten verwendet.

In ähnlicher Weise kann ein aussagekräftiger Vergleichswert gebildet werden, indem zu wenigstens einem Teil der Simulationsbilddaten, also z.B. wieder einer Bildregion, ein erstes Histogramm und zu einem jeweils entsprechenden Teil der Referenzbilddaten ein zweites Histogramm berechnet wird und in Abhängigkeit von den berechneten Histogrammen einer der Vergleichswerte gebildet wird. Histogramme werden bevorzugt im Zusammenhang mit Kantenverlaufsrichtungsdaten verwendet.

Ein weiterer Vorteil ergibt sich, wenn vor dem Überprüfen, ob das Überprüfungskriterium erfüllt ist, die Vergleichswerte, die zu den unterschiedlichen Vergleichsmaßen gebildet wurden, miteinander verknüpft werden. Die hierdurch verringerte Anzahl an zu überprüfenden Werten vereinfacht es, ein geeignetes Überprüfungskriterium festzulegen. Zudem können unterschiedliche Kamera-Simulationssysteme anhand der verknüpften Werte einfacher verglichen werden. Ergibt sich beispielsweise für eine bestimmte Kamera-Simulationseinrichtung im Zusammenhang mit einem bestimmten Simulationsproblem eine signifikante Abweichung in den Farbintensitätsdaten, bei einer anderen Kamera-Simulationseinrichtung dagegen eine in den Kontrastdaten, so ist zunächst nicht klar, für welche der beiden Kamera-Simulationseinrichtungen es lohnenswerter ist, dass man sie als Ausgangspunkt für weitere Entwicklungsarbeiten zum Lösen des Simulationsproblems heranzieht. Mittels eines verknüpften Werts sind die beiden Kamera-Simulationseinrichtungen dagegen direkt vergleichbar.

Bei der Verknüpfung wird bevorzugt wenigstens einer der zu verknüpfenden Vergleichswerte mit einem vorbestimmten Gewichtungsfaktor skaliert. Hierdurch lässt sich ein Einfluss eines Vergleichswerts auf den durch die Verknüpfung gebildeten Wert steuern und somit die Relevanz des zugehörigen Vergleichsmaßes für das Verknüpfungsergebnis vorgeben. Somit wird es insbesondere möglich, die Kamera-Simulationseinrichtung im Zusammenhang mit einer Verwendung für einen bestimmten Typ von Objekterkennungseinrichtung zu überprüfen. So können beispielsweise Spurhalteassistenzsysteme auf Erkennungseinrichtungen basieren, die vornehmlich auf die Erkennung der Kanten von Fahrbahnstreifen ausgelegt sind. Entsprechend sind dann Vergleichswerte für Kontraste oder Kantenverlaufsrichtungen durch deren entsprechende Gewichtung beim Bilden des verknüpften Werts zu betonen.

In einer vorteilhaften Weiterbildung wird durch das erfindungsgemäße Verfahren nicht nur die Validierung, sondern auch die Weiterentwicklung einer Kamera-Simulationseinrichtung ermöglicht. Eine Funktionsweise der Kamera-Simulationseinrichtung wird dazu iterativ für die Verwendung bei der Bewertung von Objekterkennungseinrichtung angepasst. Die Kamera-Simulationseinrichtung wird so schrittweise weiterentwickelt. Hierbei wird nach jeder Veränderung der Kamera-Simulationseinrichtung anhand des Überprüfungskriteriums nachvollzogen, ob die Simulationsbilddaten realitätsnäher geworden sind. Das Verändern der Funktionsweise der Kamera-Simulationseinrichtung erfolgt mittels eines Konfigurationsdatensatzes, der ihre Funktionsweise festgelegt. Zu dem Konfigurationsdatensatz wird ein Ergebnis der Überprüfung des Erfülltseins des Überprüfungskriteriums ermittelt und dann der Konfigurationsdatensatz in Abhängigkeit von dem Überprüfungsergebnis verändert.

Um zu überprüfen, ob das Überprüfungskriterium erfüllt ist, ist in einer (nicht gesondert beanspruchten) Ausführungsform des erfindungsgemäßen Verfahrens eine Auswerteeinheit bereitgestellt sein, die anzeigt, ob die Kamera-Simulationseinrichtung zum Testen einer Objekterkennungseinrichtung geeignet ist.

Eine besonders für die automatisierte Ausführung geeignete Ausführungsform des erfindungsgemäßen Verfahrens sieht vor, dass ein Wertebereich vorgegeben wird und hierzu als Überprüfungskriterium festgelegt wird, dass jeder Vergleichswert aus einer vorbestimmten Menge von Vergleichswerten oder eine Verknüpfung der Vergleichswerte aus dieser Menge in diesem Wertebereich liegen muss. Falls es sich bei den verwendeten Vergleichsmaßen um Abstandsmaße handelt, zu denen sich zum einen stets nur positive Vergleichswerte ergeben und die mit wachsender Realitätsnähe zu immer kleineren Vergleichswerten führen, so reicht zum Festlegen des Wertebereichs die Vorgabe eines Grenzwerts.

Eine Ausführungsform des erfindungsgemäßen Verfahrens sieht vor, das Überprüfungskriterium auf der Grundlage von Überprüfungsbilddaten festzulegen, zu welchen bekannt ist, ob sie bei einer Bewertung der Funktionstüchtigkeit der Objekterkennungseinrichtung zu aussagekräftigen Bewertungsergebnissen führen. Dieser heuristische Ansatz ermöglicht es, auch dann ein Überprüfungskriterium festzulegen, wenn ein Zusammenhang zwischen den Vergleichswerten zu einem gewählten Vergleichsmaß und der Tatsache, dass eine Kamera-Simulationseinrichtung für die Evaluation einer Objekterkenriungseinrichtung geeignet ist oder nicht, analytisch nicht oder nur mit hohem Aufwand ermittelbar ist.

Bei einer anderen Ausführungsform des erfindungsgemäßen Verfahrens wird auf einer Anzeigeeinrichtung wenigstens ein Teil der Vergleichswerte graphisch dargestellt. Hierbei werden die dargestellten Vergleichwerte Bildregionen zugeordnet, die denjenigen Simulations- und Referenzbilddaten entsprechen, auf deren Grundlage die jeweiligen Vergleichswerte gebildet wurden. Auf der Anzeigeeinrichtung wird also zu dem analysierten Bild (bzw. der analysierten Bildsequenz) ein entsprechendes Bild (eine entsprechende Bildsequenz) aus den Vergleichswerten gebildet. Wenn sich dann herausstellt, dass die Vergleichswerte zu Bildregionen, in denen beispielsweise eine Straßenböschung dargestellt ist, besonders groß sind, erkennt ein Entwickler der Kamera-Simulationseinrichtung, dass die Simulation von Straßenböschungen verbessert werden muss, um realitätsnähere Simulationsbilddaten zu erhalten.

Zu der Erfindung gehört auch eine Vorrichtung zum Überprüfen einer Eignung der Kamera-Simulationseinrichtung für eine Verwendung derselben bei der Bewertung der Funktionstüchtigkeit der Objekterkennungseinrichtung. Die erfindungsgemäße Vorrichtung umfasst wenigstens zwei Vergleichseinrichtungen zum Vergleichen von Simulationsbilddaten der Kamera-Simulationseinrichtung mit Referenzbilddaten einer Kamera anhand eines vorbestimmten Vergleichsmaßes. Wie bereits im Zusammenhang mit dem erfindungsgemäßen Verfahren beschrieben wurde, sind die Vergleichsmaße derart gewählt, dass zu jedem davon ein Wert unabhängig von einer Verarbeitung der Daten durch die Objekterkennungseinrichtung bestimmt werden kann. Zu der erfindungsgemäßen Vorrichtung gehört des Weiteren eine mit der wenigstens einen Vergleichseinrichtung gekoppelte Überprüfungseinrichtung zum Überprüfen, ob durch eine Gesamtheit von zu den Simulationsbilddaten durch die Vergleichseinrichtungen erzeugten Vergleichswerten ein Überprüfungskriteriums erfüllt ist.

Die Überprüfungseineinrichtung umfasst in einer (hier nicht gesondert beanspruchten) Ausführungsform die bereits im Zusammenhang mit der automatischen Überprüfung des Überprüfungskriteriums beschriebene Auswerteeinheit. Durch eine weitere vorteilhafte Ausführungsform ist eine Anzeigeeinrichtung bereitgestellt, durch welche Vergleichswerte für einzelne Bildregionen graphisch dargestellt werden.

Die erfindungsgemäße Vorrichtung vereinfacht in vorteilhafter Weise das Ausführen des erfindungsgemäßen Verfahrens. Zu den im Zusammenhang mit dem erfindungsgemäßen Verfahren beschriebenen Weiterbildungen ergeben sich entsprechende Weiterbildungen der erfindungsgemäßen Vorrichtung, durch die dann jeweils auch dieselben Vorteile wie durch die entsprechende Weiterbildung des erfindungsgemäßen Verfahrens erzielt werden können.

Die Erfindung wird im Folgenden anhand eines bevorzugten Ausführungsbeispiels näher erläutert. Dazu zeigt:
- Fig. 1: eine schematische Darstellung einer Validierungseinrichtung gemäß einer Ausführungsform der erfindungsgemäßen Vorrichtung,
- Fig. 2: eine Gegenüberstellung von Vergleichswerten zu unterschiedlichen Simulationsbilddaten und
- Fig. 3a, 3b: eine schematische Darstellung zweier Anzeigen, wie sie auf einem Bildschirm der Validierungseinrichtung zu zwei unterschiedlichen Simulationen angezeigt werden.

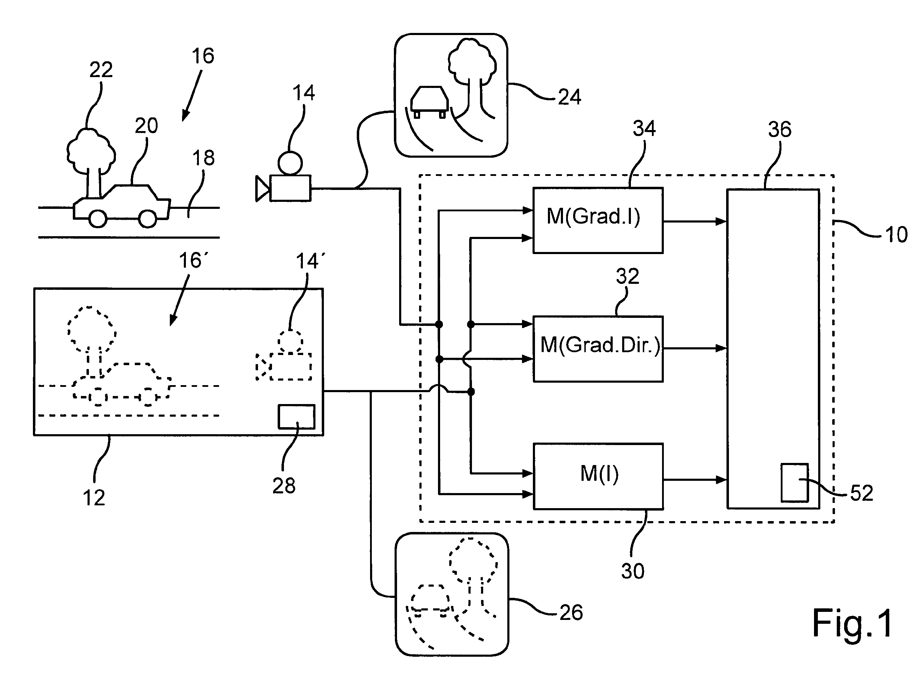

In Fig. 1 ist eine Validierungseinrichtung 10 gezeigt, mit der überprüft werden wird, ob ein Simulator 12 Bilddaten erzeugt, die bei der Entwicklung einer (nicht dargestellten) Objekterkennungseinrichtung für ein Kraftfahrzeug verwendet werden können. Bei den vom Simulator 12 erzeugten Bilddaten kann es sich um einzelne Bilder von Fahrszenen oder auch um eine Bildfolge handeln, die z.B. einen Verlauf einer Fahrt zeigt. Der Simulator 12 kann auch einen Bildausschnitt bzw. einer Bildfolge zu dem Ausschnitt erzeugen, um die Objekterkennungseinrichtung gezielt auf einen bestimmten Aspekt, z.B. die Erkennung eines Fußgängers, testen zu können.

Um den Simulator 12 mittels der Validierungseinrichtung 10 zu überprüfen, wird mit einem (nicht dargestellten) Testfahrzeug, in dem eine Kamera 14 eingebaut ist, eine Testfahrt durchgeführt. Dabei wird mit der Kamera 14 eine Fahrszene 16 gefilmt. Die Fig. 1 dargestellte Fahrszene 16 zeigt ein dem Testfahrzeug auf einer Straße 18 vorausfahrendes Fahrzeug 20 und einen am Rand der Straße 18 stehenden Baum 22. Die bei der Testfahrt erzeugten Kamerabilddaten 24 werden anschließend als Referenzbilddaten zum Überprüfen des Simulators 12 bereitgestellt.

Der Simulator 12 ist eine Kamera-Simulationseinrichtung, mit der sowohl eine simulierte Umgebung 16' zu der Fahrszene 16 berechnet als auch eine Abbildungscharakteristik 14' der bei der Testfahrt verwendeten Kamera 14 nachgebildet wird. Auf der Grundlage der simulierten Umgebung 16' und der nachgebildeten Abbildungscharakteristik 14' werden Simulationsbilddaten 26 erzeugt. Ein von dem Simulator 12 ausgeführter Simulationsalgorithmus kann durch Einstellen von Parameterwerten konfiguriert werden. Hierzu sind in den Simulator 12 entsprechende Konfigurationsdaten 28 gespeichert worden.

Die Validierungseinrichtung 10 führt einen Vergleich der Simulationsbilddaten 26 mit den Kamerabilddaten 24 durch, auf dessen Grundlage überprüft werden kann, wie ähnlich die Simulationsbilddaten 26 den Kamerabilddaten 24 sind.

Bei der Validierungseinrichtung 10 ist der Vergleich durch drei Vergleichseinrichtungen 30, 32 und 34 ermöglicht.

Mit der Vergleichseinrichtung 30 werden zu den Kamerabilddaten 24 und den Simulationsbilddaten 26 Helligkeits- oder Intensitätswerte I berechnet und die Intensitätswerte aus den Simulationsbilddaten 26 mit denjenigen aus den Kamerabilddaten 24 mithilfe einer Berechnungsvorschrift zum Bestimmen eines Werts für ein Maß M(I) des Abstands der Intensitätswerte verglichen.

Mit der Vergleichseinrichtung 32 werden zu den Kamerabilddaten 24 und den Simulationsbilddaten 26 Richtungsinformationen "Grad. Dir." auf der Grundlage von zu den Intensitätswerten I berechneten Gradientenvektoren berechnet. Die Richtungsinformationen "Grad. Dir." beschreiben die Verlaufsrichtung von in den Kamerabildern und den vom Simulator 12 erzeugen Bildern erkennbaren Kanten von Objekten. Anhand eines Maßes M(Grad. Dir.) wird ein "Abstand" der Simulationsbilddaten 26 zu den Kamerabilddaten 24 in Bezug auf die Richtungsinformationen "Grad. Dir." berechnet.

Mit der Vergleichseinrichtung 34 werden die Beträge der Gradientenvektoren berechnet. Diese beschreiben einen in den Bildern erkennbaren Helligkeitskontrast "Grad. I". Durch die Vergleichseinrichtung 34 werden auf der Grundlage des Kontrasts "Grad. I" Werte zu einem Abstandsmaß M(Grad. I.) berechnet.

Die Vergleichseinrichtungen 30, 32, 34 berechnen die Werte zu den jeweiligen Abstandsmaßen M(I), M(Grad. I), M(Grad. Dir.) für einzelne Bildblöcke der durch die Kamerabilddaten 24 und die Simulationsbilddaten 26 repräsentierten Bilder. Beispielsweise kann vorgesehen sein, ein einzelnes Bild in 10 mal 8 gleichgroße Bildblöcke zu unterteilen. Neben den blockweise berechneten Werten kann zu jedem Abstandsmaß M(I), M(Grad. I), M(Grad. Dir.) noch ein Gesamtwert für jeweils ein ganzes Bild berechnet werden. Die Gesamtwerte und auch die diesen zugrunde liegenden Wert stellen jeweils einen Vergleichswert dar.

Durch die drei Vergleichseinrichtungen 30, 32, 34 wird insgesamt folgender Algorithmus durchgeführt, um Vergleichswerte zu einem Bild 1 und einem Bild 2 zu bilden, von denen eines durch die Kamerabilddaten 24 und eines durch die Simulationsbilddaten 26 repräsentiert ist:
- Lege die Anzahl der Blöcke fest, in welche die beiden Bilder jeweils unterteilt werden sollen;
- Berechne zu jedem Bild aus den entsprechenden Bilddaten die Farbintensitätswerte I und die Gradienten "Grad."
- Prozessiere jedes Paar einander entsprechender Blöcke der Bilder 1 und 2 (Block 1 und Block 2):
   a) Ermittle "I", "Grad. I" und "Grad. Dir." zu den Bildpunkten der Blöcke 1 und 2
   b) Vergleich der Intensitätswerte I:
      - Berechne jeweils zu Block 1 und Block 2 den Mittelwert und die Varianz der Farbintensitätswerte
      - Berechne die Differenz des Mittelwerts von Block 1 und Block 2 sowie die Differenz des Varianzwerts von Block 1 und Block 2
      - Verknüpfe die berechneten Differenzen, um den Vergleichswert M(I) für das Blockpaar zu erhalten
   c) Vergleich der Kantenverlaufsrichtungsinformationen "Grad. Dir.":
      - Ermittle jeweils ein Histogramm der Gradienten zu Block 1 und Block 2
      - Berechne als Vergleichswert M(Grad. Dir.) für das Blockpaar den quadratischen, auf die Blockgröße bezogenen Fehler (z.B. die Summe der Quadrate der Differenzen der einzelnen, einander entsprechenden Einträge der beiden Histogramme)
   d) Vergleich der Kontrastwerte "Grad. I"
      - Berechne jeweils zu Block 1 und Block 2 den Mittelwert und die Varianz der Kontrastwerte
      - Berechne die Differenz der Mittelwerte von Block 1 und Block 2 sowie die Differenz der Varianzwerte von Block 1 und Block 2
      - Verknüpfe die berechneten Differenzen, um den Vergleichswert M(Grad. I.) für das Blockpaar zu erhalten
   e) Bilde die Summe der Vergleichswerte M(I) zu allen Blöcken, die Summe der Vergleichswerte M(Grad. Dir.) zu allen Blöcken und die Summe M(Grad. I) zu allen Blöcken .

Zum Verknüpfen der zu den Mittelwerten und Varianzen berechneten Differenzen kann z.B. die Summe der Differenzen oder die Summe ihrer Beträge oder die Summe ihrer Quadrate gebildet werden.

Die oben erwähnten Histogramme werden ermittelt, indem zu einzelnen Verlaufsrichtungen (z.B. 0°, 90°, 180°, 270° bezüglich eines horizontalen, in dem Bild zum rechten Rand hin orientierten Strahls) gezählt wird, wie oft ein Gradient mit einer entsprechende Verlaufsrichtung in dem jeweiligen Block vorkommt.

Von den Vergleichseinrichtungen 30, 32, 34 werden die berechneten Vergleichswerte an eine Überprüfungseinrichtung 36 übertragen.

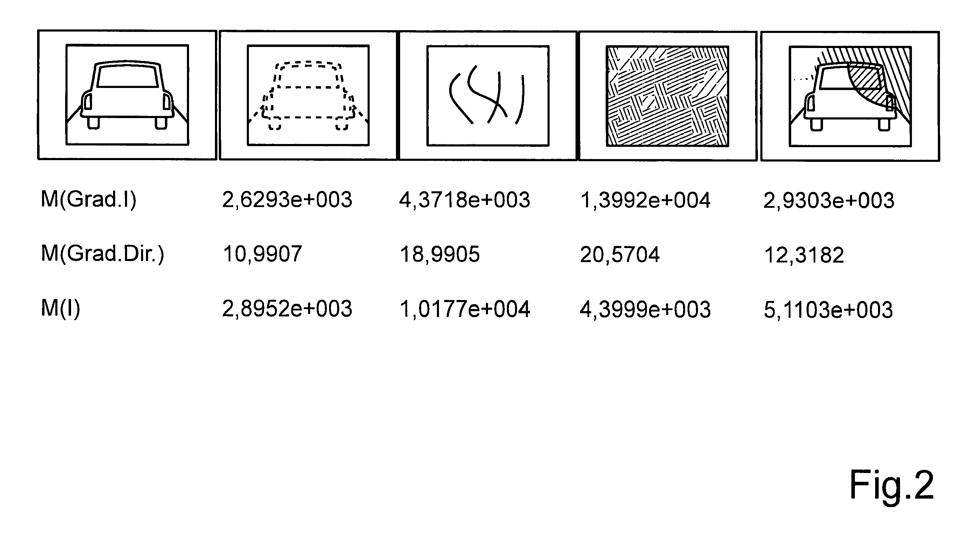

In Fig. 2 ist zu den in dem Schritt e) des obigen Algorithmus berechneten Summen gezeigt, welche Werte sich für unterschiedliche Bilder ergeben können. Ein Referenzbild 38, dessen Bilddaten hier den Kamerabilddaten 24 entnommen sind, zeigt eine Rückansicht des Fahrzeugs 20 und einen Abschnitt der Straße 18.

Das Referenzbild 38 ist in dem in Fig. 2 gezeigten Beispiel mit weiteren Bildern mittels des obigen Algorithmus verglichen worden. Ein Bild 40 zeigt das Fahrzeug 20 bei Nebel. Das Bild 40 wurde mittels des Simulators 12 berechnet. Ein Bild 42 zeigt Linien, deren Verlauf zufällig festgelegt wurde. Ein Bild 44 zeigt ein Rauschen. Ein Bild 46 zeigt das Fahrzeug 20 während es von der Sonne beschienen ist, so dass ein Schlagschatten 48 auf dem Fahrzeug 20 zu sehen ist. Des Weiteren zeigt Bild 46 das Fahrzeug 20 in einer anderen Umgebung, in welcher sich ein Wald 50 am Straßenrand befindet. Das Bild 46 ist ebenfalls mittels des Simulators 12 erzeugt.

In dem Beispiel von Fig. 2 sind mit den Bildern 40 bis 46 bewusst Bilder gewählt worden, deren Inhalt sich von dem Referenzbild 38 unterscheidet. Hierdurch kann die Plausibilität der zu den Abstandsmaßen M(I), M(Grad. I) und M(Grad. Dir.) berechneten Summenwerte überprüft werden. In Fig. 2 sind in drei Zeilen die sich zu den Bildern 40 bis 46 ergebenden Summenwerte angegeben. Die Bilder 42 und 44, die den geringsten inhaltlichen Bezug zum Referenzbild 38 haben, weisen im Falle der Abstandsmaße M(Grad. I) und M(Grad. Dir.) konsistent die größten Vergleichswerte auf. Im Falle des Abstandsmaßes M(I) bilden die Bilder 44 und 46 eine Ausnahme. Schließlich ergibt sich durch den Schlagschatten 48 und den Wald 50 im Bild 46 ein größerer Wert für alle Vergleichsmaße als bei dem Bild 40.

Bei der eigentlichen Validierung des Simulators 12 wird natürlich anstelle der Bilder 40 bis 46 mittels des Simulators 12 ein Bild erzeugt, das dem Referenzbild 38 möglichst ähnlich ist. Für die sich dann ergebenden Summenwerte können dann beispielsweise von einem Benutzer der Validierungseinrichtung 10 Grenzwerte 52 vorgegeben werden. Durch die Validierungseinrichtung 10 werden dann die berechneten Summenwerte mit den entsprechenden Grenzwerten verglichen. Falls jeder Summenwert kleiner als der zu ihm vorgegebene Grenzwert ist, zeigt die Validierungseinrichtung 10 an, dass der Simulator 12 ein Bild erzeugt hat, welches die Fahrzeugumgebung ausreichend real darstellt.

Es kann auch vorgesehen sein, dass durch die Überprüfungsrichtung 36 die drei Summenwerte noch einmal zu einem einzigen Summenvergleichswert zusammengefasst werden.

Anstelle einer automatisierten Überprüfung der Vergleichswerte auf der Grundlage der Grenzwerte 52 kann auch vorgesehen sein, die Validierungseinrichtung 10 bei der Weiterentwicklung des Simulators 12 zu verwenden und zwar als Unterstützung für den Entwickler. Dieser nimmt dann selbst die eigentliche Überprüfung der Vergleichswerte vor.

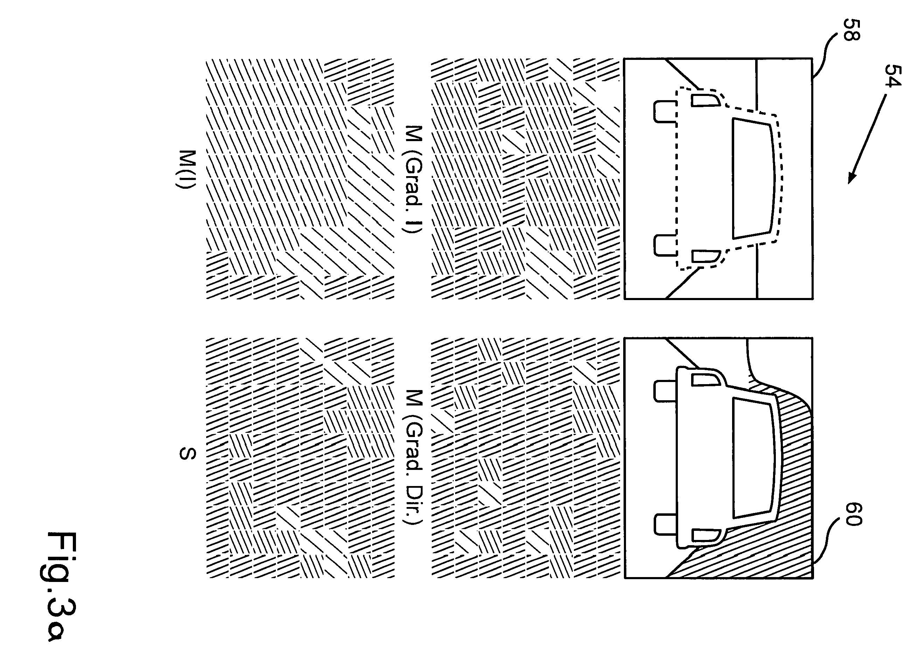

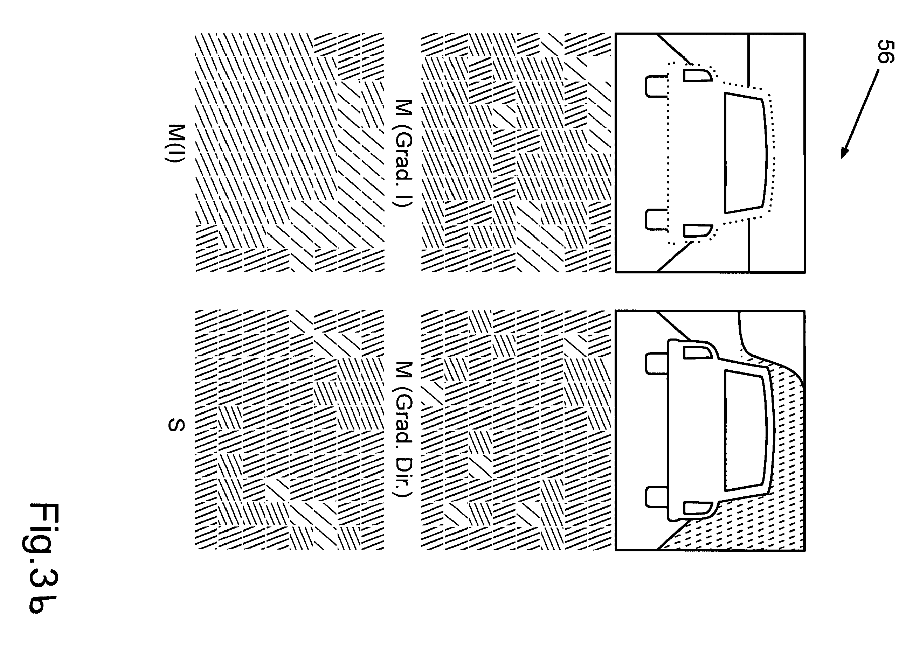

Die Überprüfungseinrichtung 36 weist für diesen Fall einen (nicht näher dargestellten) Bildschirm auf. In Fig. 3a, 3b sind zwei Anzeigen 54, 56 des Bildschirms gezeigt, durch welche dem Entwickler die zu einzelnen Bildblöcken berechneten Vergleichswerte für die unterschiedlichen Abstandsmaße M(I), M(Grad. I) und M(Grad. Dir.) sowie ein Summenmaß S angezeigt werden. Das Summenmaß S wird durch die Überprüfungseinrichtung 36 gebildet, indem zu jedem Bildblock die Vergleichswerte zu den Abstandsmaßen M(I), M(Grad. I) und M(Grad. Dir.) durch Bilden einer gewichteten Summe zu einem Gesamtvergleichswert kombiniert werden. Diese gewichteten Summen stellen ebenfalls Vergleichswerte dar.

Die Anzeige 54 zeigt ein Referenzbild 58, das eine Rückansicht eines Fahrzeugs bei Nebel darstellt. Ein Bild 60 zeigt dasselbe Fahrzeug bei klarer Sicht und in einer anderen Umgebung. In unter dem Referenzbild 58 und dem Bild 60 angezeigten Feldern sind jeweils Vergleichwerte zu einzelnen Bildblöcken graphisch dargestellt. Die in Fig. 3a, 3b gezeigte Schraffierung eines Bildblocks gibt dabei den Betrag des Vergleichswerts wieder. Ein schwarzer Block zeigt einen kleinen Wert an, ein weißer einen großen. Je dichter die Schraffierung ist, desto kleiner ist der entsprechende Vergleichswert.

Die Anzeige 56 beruht ebenfalls auf dem Referenzbild 58 und dem Bild 60. Für das in der Anzeige 56 dargestellte Beispiel sind die Helligkeitswerte dieser beiden Bilder mit einem Faktor von 1,4 multipliziert worden, so dass die Bilder heller sind. Trotz dieser Veränderung ergeben sich für die Abstandsmaße M(I), M(Grad. I), M(Grad. Dir.) und insbesondere das Summenmaß S Vergleichswerte, die den Vergleichswerten in der Anzeige 54 ähnlich sind. Dem Entwickler wird hierdurch angezeigt, dass eine Objekterkennungseinrichtung in beiden Fällen (normale Helligkeit und um den Faktor 1,4 gesteigerte Helligkeit) sehr ähnliche Erkennungsergebnisse erzeugen würde.

Die den Anzeigen 54 und 56 zugrunde liegenden Vergleiche sind hier nur zur Veranschaulichung der Aussagekraft der Abstandsmaße M(I), M(Grad. I), M(Grad. Dir.) gewählt worden. Für die Validierung des Simulators 12 werden anstelle des Referenzbildes 58 und des Bildes 60 Bilddaten aus den Kamerabilddaten 24 und den zugehörigen Simulationsbilddaten 26 verglichen. Der Entwickler kann dann anhand der Anzeigen auf dem Bildschirm erkennen, wie er die Konfigurationsdaten 28 verändern muss, um Simulationsbilddaten 26 zu erhalten, die den Kamerabilddaten 24 ähnlicher sind.

Der Simulator 12, die Vergleichseinrichtungen 30, 32, 34 und die Überprüfungseinrichtung 36 können durch ein oder mehrere Programme in einem Computer oder durch ein oder mehrere Messgeräte bereitgestellt sein.

Insgesamt ist durch das Beispiel gezeigt, wie durch die Erfindung ein Vergleich von ganzen Bildern bzw. Bildfolgen oder auch von Ausschnitten aus diesen ermöglicht ist. Die Vergleichsergebnisse sind gegen geringfügige Abweichungen der Simulation robust und zudem dahingehend konsistent, dass Bilder mit unterschiedlichen Inhalten auch zu größeren Werten für die Abstandsmaße führen. Das als ähnlichstes identifizierte Bild weist inhaltlich entsprechend auch die größte Übereinstimmung mit dem Referenzbild auf. Ein Entwickler ist in der Lage, die Ergebnisse auch visuell auszuwerten und zu beurteilen. Insbesondere wird ermöglicht, die Simulationsmodelle in Abhängigkeit von den Metrik-Resultaten (den Vergleichswerten) zu adaptieren, indem z.B. die Konfigurationsdaten des Simulators verändert werden.

## Patentansprüche

1. Verfahren zum Bewerten einer Funktionstüchtigkeit einer Objekterkennungseinrichtung eines Kraftfahrzeugs mittels einer Kamera-Simulationseinrichtung (12), umfassend die Schritte:
- Bereitstellen von mittels einer Kamera (14) erzeugten Referenzbilddaten (24) zu wenigstens einer Fahrstrecke (16);
- Erzeugen von Simulationsbilddaten (26) zu der wenigstens einen Fahrstrecke (16) mittels der Kamera-Simulationseinrichtung (12);
- Vergleichen der Simulationsbilddaten (26) mit den Referenzbilddaten (24) anhand von wenigstens zwei unterschiedlichen, vorbestimmten Vergleichsmaßen (M(I), M(Grad. I), M(Grad. Dir.), S), zu denen jeweils unabhängig von einer Verarbeitung der Daten durch die Objekterkennungseinrichtung ein Wert bestimmbar ist, und hierzu Bilden wenigstens eines Vergleichswerts zu jedem Vergleichsmaß (M(I), M(Grad. I), M(Grad. Dir.), S);
- Überprüfen, ob durch die Gesamtheit der erzeugten Vergleichswerte ein vorbestimmtes Überprüfungskriteriums (52) erfüllt ist, und gegebenenfalls Bereitstellen der Kamera-Simulationseinrichtung (12) für die Verwendung bei der Bewertung der Funktionstüchtigkeit der Objekterkennungseinrichtung.

2. Verfahren nach Anspruch 1, bei welchem durch eines der Vergleichsmaße (M(I), M(Grad. I), M(Grad. Dir.)) ein Unterschied von Farbintensitätsdaten, Helligkeitsdaten (I), Kontrastdaten (Grad. I.) oder Kantenverlaufsrichtungsdaten (Grad. Dir) beschrieben ist.

3. Verfahren nach Anspruch 1 oder 2, bei welchem der Vergleich für einzelne, einander entsprechende Bildregionen zweier Bilder (58, 60) durchgeführt wird, von denen das eine durch die Simulationsbilddaten und das andere durch die Referenzbilddaten repräsentiert ist, und hierbei zu jeder Bildregion und zu jedem Vergleichsmaß (M(I), M(Grad. I), M(Grad. Dir.), S) ein Vergleichswert gebildet wird.

4. Verfahren nach einem der vorhergehenden Ansprüche, bei welchem zu wenigstens einem Teil der Simulationsbilddaten (26) ein erster statistischer Mittelwert und/oder ein erster statistischer Varianzwert und zu einem jeweils entsprechenden Teil der Referenzbilddaten (24) ein zweiter statistischer Mittelwert und/oder ein zweiter statistischer Varianzwert berechnet wird und in Abhängigkeit den berechneten statistischen Werten einer der Vergleichswerte gebildet wird.

5. Verfahren nach einem der vorhergehenden Ansprüche, bei welchem zu wenigstens einem Teil der Simulationsbilddaten (26) ein erstes Histogramm und zu einem jeweils entsprechenden Teil der Referenzbilddaten (24) ein zweites Histogramm berechnet wird und in Abhängigkeit den berechneten Histogrammen einer der Vergleichswerte gebildet wird.

6. Verfahren nach einem der vorhergehenden Ansprüche, bei welchem bei dem Schritt des Überprüfens des Erfülltseins des Überprüfungskriteriums Vergleichswerte, die zu unterschiedlichen Vergleichsmaßen gebildete wurden, miteinander zu einem Gesamtvergleichswert (S) verknüpft werden und hierbei bevorzugt wenigstens einer dieser zu verknüpfenden Vergleichswerte mit einem vorbestimmten Gewichtungsfaktor skaliert wird.

7. Verfahren nach einem der vorhergehenden Ansprüche, bei welchem eine Funktionsweise der Kamera-Simulationseinrichtung (12) iterativ für die Verwendung bei der Bewertung angepasst wird, indem mittels eines Konfigurationsdatensatzes (28) die Funktionsweise der Kamera-Simulationseinrichtung (12) festgelegt wird, zu dem Konfigurationsdatensatz (28) ein Ergebnis der Überprüfung des Erfülltseins des Überprüfungskriteriums (52) ermittelt wird und der Konfigurationsdatensatz (28) in Abhängigkeit von dem Überprüfungsergebnis verändert wird.

8. Verfahren nach einem der vorhergehenden Ansprüche, bei welchem auf einer Anzeigeeinrichtung wenigstens ein Teil der Vergleichswerte graphisch dargestellt wird und hierbei die dargestellten Vergleichwerte (54, 56) Bildregionen zugeordnet werden, die denjenigen Simulations- und Referenzbilddaten entsprechen, auf deren Grundlage die jeweiligen Vergleichswerte gebildet wurden.

9. Verfahren nach einem der vorhergehenden Ansprüche, bei welchem anhand von drei Vergleichsmaßen (M(I), M(Grad. I), M(Grad. Dir.)) verglichen wird.

10. Verfahren nach einem der vorhergehenden Ansprüche, bei welchem das Überprüfungskriterium auf der Grundlage von Überprüfungsbilddaten festgelegt wird, zu welchen bekannt ist, ob sie bei einer Bewertung der Funktionstüchtigkeit der Objekterkennungseinrichtung zu aussagekräftigen Bewertungsergebnissen führen.

11. Verfahren nach einem der vorhergehenden Ansprüche, bei welchem ein Wertebereich (52) vorgegeben und hierzu als Überprüfungskriterium festgelegt wird, dass jeder Vergleichswert aus einer vorbestimmten Menge oder eine Verknüpfung der Vergleichswerte aus dieser Menge in dem Wertebereich (52) liegen muss.

12. Vorrichtung zum Überprüfen einer Eignung einer Kamera-Simulationseinrichtung (12) für eine Verwendung bei einer Bewertung einer Funktionstüchtigkeit einer Objekterkennungseinrichtung eines Kraftfahrzeugs,
umfassend:
- wenigstens zwei Vergleichseinrichtungen (30, 32, 34) zum Vergleichen von Simulationsbilddaten (26) der Kamera-Simulationseinrichtung (12) mit Referenzbilddaten (24) einer Kamera (14) anhand eines vorbestimmten Vergleichsmaßes (M(I), M(Grad. I), M(Grad. Dir.)), zu welchem unabhängig von einer Verarbeitung der Daten durch die Objekterkennungseinrichtung ein Wert bestimmbar ist; und
- eine mit den wenigstens zwei Vergleichseinrichtungen (30, 32, 34) gekoppelten Überprüfungseinrichtung (36) zum Überprüfen, ob durch eine Gesamtheit von zu den Simulationsbilddaten (26) durch die Vergleichseinrichtungen (30, 32, 34) erzeugten Vergleichswerten ein Überprüfungskriterium (52) erfüllt ist.
